# EUROPÄISCHE PATENTSCHRIFT

(11) **EP 3 824 258 B1**
(45) Veröffentlichungstag und Bekanntmachung des Hinweises auf die Patenterteilung: **26.10.2022**
(21) Anmeldenummer: 19730349.8
(22) Anmeldetag: 13.06.2019
(51) Int. Cl.: G01F 23/284, H01Q 1/22

(54) **HOCHFREQUENZBAUSTEIN**
HIGH-FREQUENCY MODULE
MODULE À HAUTE FRÉQUENCE

(30) Priorität: 16.07.2018 DE 102018117166
(43) Veröffentlichungstag der Anmeldung: 26.05.2021
(73) Patentinhaber: Endress+Hauser SE+Co. KG, 79689 Maulburg (DE)
(72) Erfinder: HITZLER, Martin, 89075 Dillingen (DE); MAYER, Winfried, 89290 Buch (DE)
(74) Vertreter: Koslowski, Christine Adelheid
(86) Internationale Anmeldenummer: PCT/EP2019/065454
(87) Internationale Veröffentlichungsnummer: WO 2020/015935

(56) Entgegenhaltungen:
- DE-A1-102006 023 123
- DE-U1- 9 312 251
- US-A1- 2002 080 080
- US-A1- 2012 050 125
- US-A1- 2017 141 474
- US-B2- 7 068 213

## Beschreibung

Die Erfindung betrifft einen Hochfrequenzbaustein zur Erzeugung bzw. Verarbeitung von Radar-Signalen, der insbesondere zum Einsatz bei Radar-basierten Füllstandsmessgeräten gedacht ist.

Radar-basierte Abstandsmessung wird in einem breiten Anwendungsspektrum genutzt.

Entsprechende Abstandsmessgeräte werden beispielsweise zur Positionsbestimmung in der Luftfahrt, zur Abstandsmessung bei Kraftfahrzeugen oder zur Füllstandsmessung in der Prozessautomation industrieller Anlagen eingesetzt. Als Messverfahren ist neben dem Puls-Laufzeit-Verfahren überwiegend das FMCW-Verfahren ("*Frequency Modulated Continuos Wave",* auch bekannt als Dauerstrichradar) implementiert. Beide Verfahren werden bei definierten Radar-Frequenzen bzw. innerhalb definierter Frequenzbänder betrieben (im Rahmen dieser Erfindung beziehen sich der Begriff "Radar" und "Hochfrequenz" auf elektrische Signale bzw. elektromagnetische Wellen mit Frequenzen zwischen 0.03 GHz und 300 GHz). Das Funktionsprinzip von FMCW- und Pulsradarbasierten Füllstandsmessgeräten wird beispielsweise in *"*Radar Level Measurement"; Peter Devine, 2000 beschrieben. Eine Vorrichtung zur Radar-basierten Abstandmessung ist in US 2017/141474 A1 offenbart.

Im Bereich der Füllstandsmessung wird vorwiegend bei Radar-Frequenzen von 6 GHz, 26 GHz oder 79 GHz gearbeitet. Dabei sind zumindest bei FMCW höhere Frequenzbänder insofern bevorzugt, da in diesen Fällen eine größere absolute Frequenz-Bandbreite genutzt werden kann. Bei 79 GHz wird beispielsweise eine Bandbreite von 2 GHz genutzt, also von 78 GHz bis 80 GHz. Durch eine höhere Bandbreite kann wiederum eine höhere Auflösung der Abstandsmessung erreicht werden. Insbesondere bei der Füllstandsmessung stellt dies eine wichtige Anforderung dar, da je nach Anwendung eine möglichst genaue Kenntnis des Füllstandes erforderlich ist. Ein weiterer Vorteil bei der Verwendung hoher Frequenzen besteht darin, dass das Radar-basierte Abstandsmessgerät mit einer kleineren Antenne ausgestattet werden kann, ohne dass die Bündelungs-Wirkung der Antenne vermindert wird. Bei Füllstandsmessung werden dadurch beispielsweise verkleinerte Anschluss-Flansche zur Anbringung am Behälter möglich. Daher ist es erstrebenswert, Füllstands- bzw. Abstandsmessung im Allgemeinen auch bei höheren Frequenzen als 79 GHz (bis hin zu Radarfrequenzen von 300 GHz) zu betreiben.

Radar-Signale bei Frequenzen von über 100 GHz können zwischen dem Halbleiterbauteil, mit dem das entsprechende elektrische Hochfrequenz-Signal erzeugt wird, und der Leiterkarte, auf dem das Halbleiterbauteil platziert ist, nicht mehr über hybride Verbindungstechnologien geführt werden. Da die Dimensionen der Verbindungsstrukturen wie Bonddrähte oder Lötstellen zu den jeweiligen elektronischen Bauteilen in der Größenordnung der Wellenlänge der Radar-Signale liegen, stören diese Verbindungsstrukturen als parasitäre Elemente das Übertragungsverhalten. Darüber hinaus verursachen viele der in der Elektronik üblichen Werkstoffe mit der Frequenz steigende Verluste, durch welche die elektrischen Hochfrequenz-Signale schon über kurze Leitungs-Distanzen erheblich gedämpft werden. Die leistungsfähige und zuverlässige Kontaktierung des Halbleiterbauteils mittels hybrider Standardtechnologien ist aus diesem Grund mit zunehmender Frequenz schwierig.

Daher werden zur Erzeugung bzw. zum Empfang von Radar-Signalen insbesondere oberhalb von 60 GHz Halbleiterbauteile eingesetzt, von denen das elektrische Hochfrequenz-Signal unmittelbar als Radar-Signal abgestrahlt werden kann, bzw. mit denen eingehende Radar-Signale unmittelbar in entsprechende elektrische Hochfrequenz-Signale umwandelbar sind. Somit ist eine hybride Signalführung nicht mehr erforderlich. Die Abstrahlung und/oder die Einkopplung der Radar-Signale erfolgt über einen endsprechenden Primärstrahler. Dabei handelt es sich beispielsweise um eine Planar-Antenne, die mittels mikromechanischer Verfahren auf dem Halbleiterbauteil aufgebracht ist. Ein solches Halbleiterbauteil wird unter anderem in der Veröffentlichungsschrift DE 10 2015 119 690 A1 beschrieben. Somit wird vermieden, dass die elektrischen Hochfrequenz-Signale über externe Leiterbahnen, Lötverbindungen oder Bonddrähte geführt werden müssen. Dies vermindert gerade bei hohen Frequenzen die Leistungsfähigkeit und Störanfälligkeit des Abstandsmessgerätes.

Vorteilhaft einer monolithischen Realisierung ist zudem, dass sowohl die SignalErzeugung als auch die Signal-Auswertung im gleichen Halbleiterbauteil realisiert werden können. Hierzu können je nach Messverfahren bekannte Schaltungskomponenten implementiert werden: Im Fall von FMCW kann das Hochfrequenz-Signal für das auszusendende Radar-Signal mittels einer PLL (*"Phase Locked Loop"*) erzeugt werden; Das empfangene Radar-Signal kann per Mischer mit dem auszusendenden Hochfrequenz-Signal gemischt werden, so dass aus der so genannten Differenz-Frequenz des gemischten Signals der Abstand bzw. Füllstand ermittelt werden kann. Ein entsprechend ausgelegter Auswertungsblock kann die Differenz-Frequenz beispielsweise mittels einer FFT (*"Fast Fourier Transformation"*) des gemischten Signals ermitteln.

Damit das Halbleiterbauteil Radar-Signale effizient aussenden und einkoppeln kann, muss das Gehäuse des Halbleiterbauteils hierfür entsprechend gekapselt sein. Ein komplettes Umschließen des Halbleiterbauteils mittels Spritzguss, wie es bspw. bei SMD-Bauteilen (*"Surface Mount Device"*) erfolgt, ist nicht möglich, da hierdurch die Radar-Signale gedämpft bzw. vollständig absorbiert werden können. In der Patentschrift US 9583811 B2 wird beispielsweise ein Halbleiterbauteil beschrieben, das geeignet gekapselt ist, um Hochfrequenz-Signale als Radar-Signale in einen Hohlleiter einzukoppeln. Dazu umfasst die dortige Kapselung einen Hohlleiter, der galvanisch getrennt über dem Halbleiterbauteil angeordnet ist. Um den Hohlleiter in Bezug zum Halbleiterbauteil richtig zu positionieren, ist jedoch gegebenenfalls eine entsprechend aufwendige Justage bei der Anbringung der Kapselung erforderlich.

Der Erfindung liegt daher die Aufgabe zugrunde, einen einfach zu fertigenden Hochfrequenzbaustein zur Verfügung zu stellen, mit dem Radar-Signale effizient aus- und eingekoppelt werden können.

Die Erfindung löst diese Aufgabe durch einen Hochfrequenzbaustein, der folgende Komponenten umfasst:
- Ein Halbleiterbauteil, das ausgelegt ist, elektrische Hochfrequenz-Signale, vorzugsweise mit einer Frequenz von zumindest 60 GHz, zu erzeugen und/oder zu verarbeiten, mit einer Kontaktfläche, mittels dem die elektrischen Hochfrequenz-Signale ein- bzw. auskoppelbar sind,
- ein dielektrisches Koppelelement, das mittels der Kontaktfläche mit dem Halbleiterbauteil kontaktiert ist, um die Hochfrequenz-Signale als Radar-Signale in
- einen Wellenleiter einzukoppeln, und/oder um Radar-Signale aus dem Wellenleiter als elektrische Signale in das Halbleiterbauteil einzukoppeln.

Dabei sind das Koppelement und der Wellenleiter erfindungsgemäß so geformt, dass sie einen Steckkontakt ausbilden. In diesem Zusammenhang bezieht sich der Begriff "Kontakt" nicht auf elektrische Leitfähigkeit oder mechanischen Kontakt, sondern auf die Fähigkeit, das Radar-Signal in der beabsichtigten Mode verlustminimiert vom Koppelelement in den Wellenleiter und umgekehrt zu übertragen.

Eine einfache Möglichkeit, den Steckkontakt auszubilden, besteht darin, den Steckkontakt als
- Vertiefung im Wellenleiter oder im Koppelelement, und als
- korrespondierende Struktur in der jeweils anderen Komponente
auszulegen. Hierbei kann die Vertiefung konisch zulaufend ausgestaltet werden, wobei die Struktur, die zur Vertiefung korrespondiert, entsprechend kegelförmig bzw. kegelstumpfförmig geformt zu sein hat. Dabei kann der Kegel beispielsweise in einem Winkel zwischen 30° und 60° zulaufend ausgelegt werden. Alternativ zu einer Kegelform ist es beispielsweise auch denkbar, den Steckkontakt als Halbkugelförmige Struktur auszulegen. Sowohl Halbkugelförmige- als auch Kegelförmige Auslegung begünstigen eine Selbstzentrierung des Wellenleiters bei dessen Montage: Sofern das Koppelement, bspw. mittels eines nichtleitfähigen Klebers, auf dem Halbleiterbauteil befestigt wird, kann der Wellenleiter im Anschluss in das Koppelelement gesteckt werden, ohne dass der Kegel und die korrespondierende Vertiefung unmittelbar fluchtend sein müssen. Dies verringert die Anforderungen an die Justage während der Fertigung.

Für den Fall, dass der Wellenleiter in einen Aufsatz wie bspw. einen Spritzguss-Aufsatz eingefasst ist und das Halbleiterbauteil mitsamt dem Koppelelement auf einem Leiterplattensubstrat angeordnet ist, kann der Aufsatz (bspw. wiederum durch Kleben, Laserschweißen oder durch Löten) auf dem Leiterplattensubstrat befestigt werden: Somit kann die Kontaktierung des Steckkontaktes und die Kapselung des Halbleiterbauteils durch den Aufsatz in einem gemeinsamen Bestückungs-Schritt erfolgen. In diesem Fall ergibt sich neben der Selbstzentrierung und dem eingesparten Prozessschritt der weitere Vorteil, dass hierdurch eine Zugentlastung für den Steckkontakt ausgebildet wird. Da die Bestückung in der Regel lotrecht in Bezug zur Leiterplatte erfolgt, ist es erforderlich, den Steckkontakt und den Aufsatz entsprechend auszulegen. Alternativ oder zusätzlich zu einer Kapselung durch den Aufsatz ist es außerdem möglich, das Halbleiterbauteil, wie nach dem Stand der Technik bekannt, mit einer Vergusskapselung zu kapseln, sofern das Halbeiterbauteil an der Kontaktfläche zum Koppelelement hin frei von Verguss bleibt.

Zur effizienten Einkopplung der elektrischen Hochfrequenz-Signale bzw. der Radar-Signale in das Koppelelement umfasst das Halbleiterbauteil an der Kontaktfläche beispielsweise eine planare Metallstruktur, insbesondere eine Patch-Struktur mit einer Mindestkantenlänge von einem Viertel der Wellenlänge der Radar-Signale.

Zugunsten der verlustarmen Transmission der Radar-Signale sind das Koppelelement und der Wellenleiter vorzugsweise aus einem dielektrischen Material mit einem Dielektrizitätswert von mindestens zwei zu bemessen. Hierfür kann ein geeignetes Kunststoffmaterial oder eine entsprechende Keramik wie Al₂O₃ eingesetzt werden. In diesem Zusammenhang kann das Koppelelement und der Wellenleiter im Bereich des Steckkontaktes außerdem durch eine Ummantelung, insbesondere aus einem Metall oder einem Schaumstoff (mit einer Dielektrizitätskonstante im Bereich von Vakuum, bspw. einem PMI-basierten Hartschaumstoff), eingefasst werden. Hierdurch ergibt sich neben der Gewährleistung der elektromagnetischen Wellenführung zudem eine mechanische Stabilisierung im Bereich des Steckkontaktes.

Hinsichtlich der Frequenz des Radar-Signals ist der Wellenleiter so zu bemaßen, dass nur eine Mode ausbreitungsfähig ist, um unerwünschte Modendispersion zu vermeiden. Modendispersion wird zudem vermieden, wenn der Wellenleiter so ausgelegt ist, dass die jeweilige Grundmode oder zumindest eine niedrige Mode ausbreitungsfähig ist. Dabei ist es im Rahmen nicht fest vorgeschrieben, ob der Wellenleiter einen rechteckigen, runden oder sonstig geformten Querschnitt aufweist.

In einer Erweiterung des erfindungsgemäßen Steckkontaktes kann dieser zusätzlich einrastbar ausgelegt werden. Dies kann beispielsweise durch Konzipierung des Wellenleiters oder des Koppelelementes mit Widerhaken und korrespondierenden Einrastungen im jeweils anderen Bauteil erreicht werden. Hierdurch wird eine ungewollte Trennung des Steckkontaktes nach der Montage vermieden.

Auf Basis des erfindungsgemäßen Hochfrequenzbausteins kann ein Radar-basiertes Abstandsmessgerät aufgebaut werden, das zur Bestimmung eines Abstandes zu einem Messobjekt einsetzbar ist. Voraussetzung hierfür ist, dass das Halbleiterbauteil ausgelegt ist, um das eingekoppelte Hochfrequenz-Signal gemäß dem FMCW-Verfahren oder dem Puls-Lauzeit-Verfahren in ein Auswertungssignal mit einer niedrigeren Frequenz zu konvertieren. Neben dem erfindungsgemäßen Hochfrequenzbaustein umfasst ein solches Abstandsmessgerät zumindest eine an den Wellenleiter anschließende Antenne. Dabei kann es sich bei der Antenne bspw. um eine Hohlleiterantenne wie eine Hornantenne handeln. Die Antenne dient dazu, die Radar-Signale in Richtung des Messobjektes auszusenden und nach Reflektion am Messobjekt zu empfangen. Zudem muss das Halbleiterbauteil entsprechend dem implementierten Messverfahren (Puls-Laufzeit oder FMCW) ausgelegt sein, um anhand zumindest der reflektierten Radar-Signale den Abstand bestimmen. Wie eingangs erwähnt, bietet sich ein solches Abstandsmessgerät, das auf dem erfindungsgemäßen Hochfrequenzbaustein basiert, insbesondere zur Verwendung als Füllstandsmessgerät zur Messung eines Füllstandes eines in einem Behälter befindlichen Füllgutes an, da dank potentiell hoher Radar-Frequenzen eine hohe Auflösung der Füllstandsmessung erzielt werden kann.

Anhand der nachfolgenden Figuren wird die Erfindung näher erläutert. Es zeigt:
Fig. 1: Einen prinzipiellen Aufbau des erfindungsgemäßen Hochfrequenzbausteins,
Fig. 2: eine mögliche Kapselung des Hochfrequenzbausteins,
Fig. 3: eine mögliche Kapselung des Halbleiterbauteils,
Fig. 4: eine mögliche Ummantelung des Steckkontaktes, und
Fig. 5: eine mögliche Verwendung des erfindungsgemäßen Hochfrequenzbasteins in einem Füllstandsmessgerät.

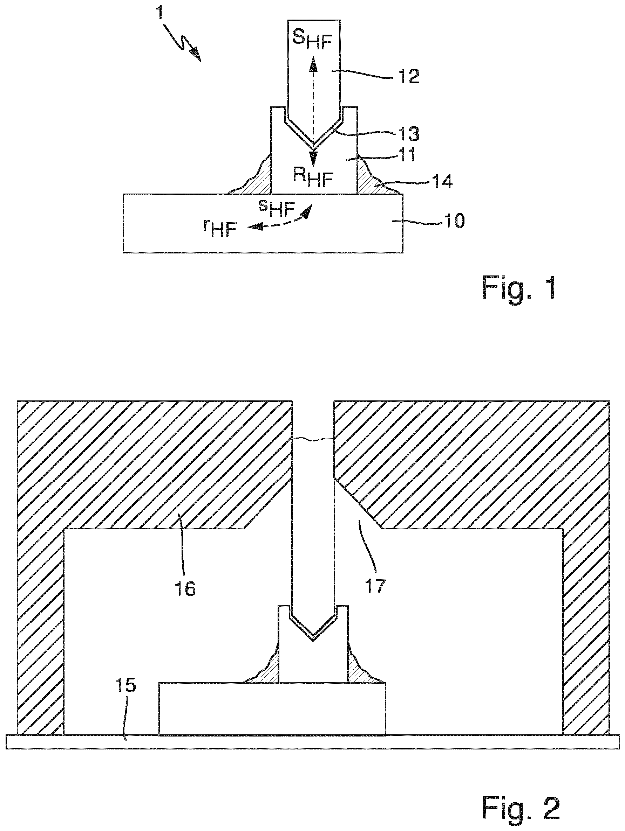

In Fig. 1 wird der erfindungsgemäße Hochfrequenzbaustein 1 mit seinen wesentlichen Komponenten dargestellt:
- Einem Halbleiterbauteil 10,
- einem Koppelelement 11 aus einem dielektrischen Material wie bspw. Al₂O₃, und
- einem ebenfalls aus dielektrischem Material gefertigten Wellenleiter 12.

Das Halbleiterbauteil 10 dient in der gezeigten Ausführungsform einerseits zur Erzeugung eines elektrischen Hochfrequenz-Signals s_{HF}, mittels dem wiederum ein Radar-Signal S_{HF} generierbar ist. Entsprechend der einzustellenden Frequenz des Radar-Signals S_{HF} ist das Halbleiterbauteil 10 ausgelegt, das Hochfrequenz-Signal s_{HF} bspw. in einem Frequenzband um 100 GHz zu erzeugen. Hierzu kann das Halbleiterbauteil 10 gemäß bei FMCW bekannten Schaltungskomponenten bspw. eine PLL (*"Phase Locked Loop"*) umfassen.

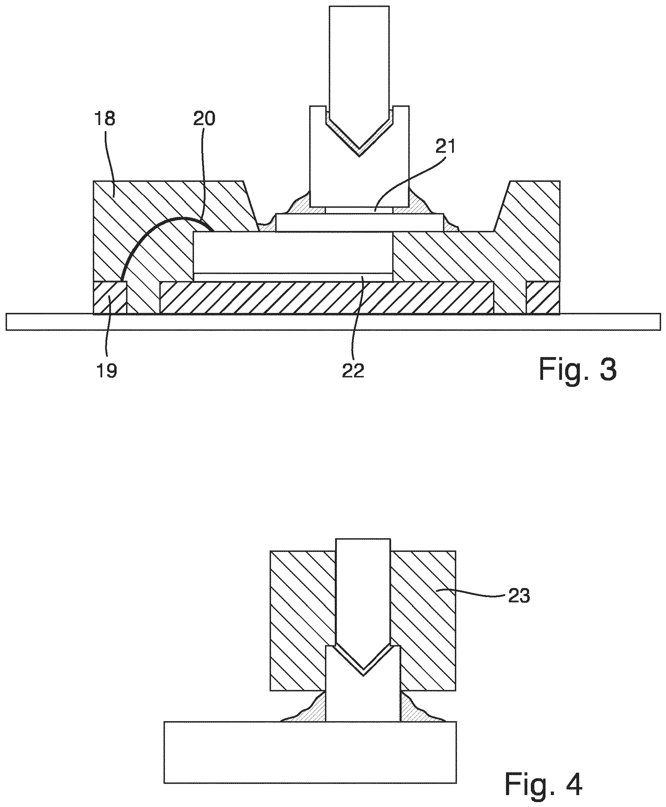

Zum anderen dient das Halbleiterbauteil 10 zur Einkopplung empfangener Radar-Signale R_{HF} (im Sinne der Erfindung versteht es sich von selbst, dass das Halbleiterbauteil 10 jeweils auch ausschließlich zur Erzeugung oder zur Einkopplung bzw. Verarbeitung der Radar-Signale S_{HF}, R_{HF} ausgelegt sein könnte). Die Aus- bzw. Einkopplung der Hochfrequenz-Signale s_{HF}, r_{HF} erfolgt seitens des Halbleiterbauteils 10 mittels einer Kontaktfläche zum Koppelelement 11 hin, wobei die Kontaktfläche beispielsweise als planare, metallisierte Patch-Struktur 21 mit einer Mindestkantenlänge von einem Viertel der Wellenlänge der Radar-Signale S_{HF}, R_{HF} ausgeführt sein kann (vergleiche Fig. 3).

Nach Empfang des Radar-Signals R_{HF} (bspw. als Echo des ausgesendeten Radar-Signals S_{HF} an einem Messobjekt 3) kann das eingekoppelte Hochfrequenz-Signal r_{HF} bspw. durch einen Hochfrequenz-Mischer mit dem momentan erzeugten Hochfrequenz-Signal S_{HF} gemischt werden, so dass aus der Differenz-Frequenz des gemischten Signals ein Abstand d zu dem jeweiligen Messobjekt 3 ermittelt werden kann. Eine entsprechend programmierte Recheneinheit kann die Differenz-Frequenz beispielsweise mittels einer FFT (*"Fast Fourier Transformation"*) des gemischten Signals ermitteln. Aus der Differenz-Frequenz kann der Abstand d bspw. durch Abgleich mit hinterlegten Abstandswerten d einer Look-Up-Table ermittelt werden. Die Wertepaare der hinterlegten Abstandswerte d und der korrespondierenden Differenz-Frequenzbereiche können wiederum auf einer Kalibrationsmessung basieren.

Das Koppelelement 11 bezweckt die Ein-/ Auskopplung der Radar-Signale S_{HF}, R_{HF} in bzw. aus dem Wellenleiter 12. Der Wellenleiter 12 wiederum dient entweder der Abstrahlung der Radar-Signale S_{HF}, in den Freiraum, bzw. dem Empfang von Radar-Signalen R_{HF} aus dem Freiraum. In diesem Fall mündet der Wellenleiter in einer Antenne, wie beispielsweise einer Hornantenne.

Daneben kann der Wellenleiter 12 in einer Stab- oder Seilartigen Sonde münden, mittels der zum Beispiel Füllstände gemäß dem TDR-Prinzip (*"Time Domain Reflectometry"*) bestimmt werden können.

Das Koppelelement 11 ist bei den in Fig. 1 bis Fig. 4 gezeigten Ausführungsvarianten mittels eines elektrisch nicht leitfähigen Klebers 14 an der oberseitigen Kontaktfläche des Halbleiterbauteils 10 befestigt. Dabei sind die Patch-Struktur 21 der Kontaktfläche und das Koppelelement 12 hinsichtlich ihrer Geometrien so ausgelegt, dass die Transmission der Radar-Signals S_{HF}, R_{HF} zwischen dem Halbleiterbauteil 10 und dem Koppelelement 11 maximiert wird. Dies entspricht einer Impedanz Anpassung.

Hinsichtlich der Frequenz des Radar-Signals ist der Wellenleiter 12 so bemaßt, dass das jeweilige Radar-Signal S_{HF}, R_{HF} nur in einer (Grund-) Mode ausbreitungsfähig ist. Es bietet sich beispielsweise an, den Wellenleiter 12 mit einem rechteckigen Querschnitt auszulegen, wobei eine erste Kantenlänge des Querschnitts in etwa 2/3 der Wellenlänge des Radar-Signals S_{HF}, R_{HF} entspricht; Die zweite Kantenlänge des rechteckigen Wellenleiter-Querschnitts ist mit ca. 1/3 der Wellenlänge des Radar-Signals S_{HF}, R_{HF} dimensioniert. Bei einer solchen Dimensionierung bietet sich insbesondere HDPE (*"High-Density Polyethylene"*) als Material für der Wellenleiter 12 an.

Gemäß der Erfindung bilden das Koppelelement 11 und der Wellenleiter 12 bei den in Fig. 1 bis Fig. 4 gezeigten Ausführungsvarianten einen kegelförmigen Steckkontakt 13 aus, wobei der Kegel in der jeweils gezeigten Ausführungsform in einem Winkel von ca. 45° zuläuft. Erfindungsgemäß dient dies dazu, um den Hochfrequenzbaustein 1 mit geringem Fertigungsaufwand fertigen zu können: Sobald das Koppelelement 11 auf dem Halbleiterbauteil 10 befestigt ist, kann der Wellenleiter 12 in das Koppelelement eingesteckt werden. Dies bietet den Vorteil, dass der Wellenleiter 12 in das Koppelelement 11 gesteckt werden kann, ohne dass der Kegel und die korrespondierende Vertiefung bei der Montage unmittelbar fluchtend sein müssen. Hierdurch wird der Justage-Aufwand bei der Fertigung deutlich reduziert.

In Fig. 2 bzw. in Fig. 3 ist ebenfalls angedeutet, dass Kleber im Steckkontakt zwischen Wellenleiter 12 und Koppelelement 11 eingebracht werden kann. Dies bietet Vorteil, dass sich Steckkontakt nach der Fertigung nicht mehr ungewollt lösen kann. Alternativ hierzu wäre es denkbar, den Steckkontakt 13 konstruktiv einrastbar auszulegen. Ebenfalls denkbar ist ein berührungsloser Kontakt mit einem (Luft-) Spalt. Vorteilhaft hieran ist, dass der Kontakt trotz eines etwaigen horizontalen oder vertikalen Versatzes zwischen dem Koppelelement 11 und dem Wellenleiter 12 vergleichsweise unempfindlich ist.

Wie aus Fig. 2 und Fig. 3 außerdem ersichtlich wird, ist das Halbleiterbauteil 10 üblicherweise auf einem Leiterplattensubstrat 15 angeordnet. Da die Hochfrequenz-Signale s_{HF}, r_{HF} nicht über das Leiterplattensubstrat 15 geführt werden müssen, können alle weiteren Signal- oder Versorgungs-Pfade zwischen dem Leiterplattensubstrat 15 bzw. einem Leadframe 19 und dem Halbleiterbauteil 10 über konventionelle Verbindungstechnologien wie Bonddrähte 20 oder elektrisch leitfähige Haftverbindungen 22 (z. B. einem Ball-Grid Array) realisiert werden.

Bei der in Fig. 2 dargestellten Ausführungsvariante des Hochfrequenzbauteils 1 ist der dielektrische Wellenleiter 12 in einen entsprechenden (Verguss-) Aufsatz 16 eingefasst. Dabei ist der Aufsatz 16 lediglich auf dem Leiterplattensubstrat 15 befestigt und umschließt das Halbleiterbauteil 10 oberseitig vollständig. Neben einer Kapselung des Halbleiterbauteils 10 bietet dies den Vorteil, dass der Steckkontakt 13 hierdurch zugentlastet wird. Konstruktiv könnte dies unterstützt werden, indem der Aufsatz 16 und der Wellenleiter so ausgelegt werden, dass der Wellenleiter 12 im eingesteckten Zustand, also wenn der Aufsatz 16 auf der Leiterplatte 15 befestigt ist, eine minimale Stauchung erfährt.

Fig. 3 veranschaulicht, dass das Halbleiterbauteil 1 (ggf. neben dem in Fig. 2 gezeigten Aufsatz zudem) mittels einer Vergusskapselung 18 gekapselt sein kann, sofern die Patch-Struktur 21 bzw. die Kontaktfläche zum Koppelelement 11 von der Vergusskapselung ausgespart ist. Somit könnte das Halbleiterbauteil 10 bspw. in einem SMD- oder DIP-Gehäuse gekapselt werden, sofern das Halbleiterbauteil nicht ohne Kapselung ("*Bare Die"*) auf der Leiterplatte 15 angeordnet ist. Außerdem weist die in Fig. 3 gezeigte Ausführungsvariante des Hochfrequenzbausteins 1 zwischen der Patch-Struktur 21 und dem Halbleiterbauteil 10 eine (dielektrische) Koppelstruktur auf. Bei entsprechender Bemaßung von deren Dicke wird die Transmission zwischen dem Halbleiterbauteil 10 und der Patch-Struktur 21 stark erhöht.

In Fig. 4 ist gezeigt, wie der Steckkontakt durch eine Ummantelung 23 des Wellenleiters 12 und des Koppelelementes 11 in diesem Bereich mechanisch geschützt werden kann. Damit die wellenführenden Eigenschaften des Koppelelementes 11 bzw. des Wellenleiters 12 durch die Ummantelung nicht beeinflusst werden, ist die Ummantelung 23 entsprechend auszulegen. Denkbar ist dementsprechend, die Ummantelung 23 aus einem Material mit einem Dielektrizitätswert ähnlich Luft oder Vakuum (=1) zu fertigen. Poröser Hartschaum, bspw. auf Basis von PMI (*"Poymethacrylimid'*) bietet beispielsweise diese Eigenschaften. Alternativ ist denkbar, die Ummantelung 23 zumindest innenwandig zu metallisieren, so dass die Radar-Signale S_{HF}, R_{HF} hieran reflektiert werden. Neben einer mechanischen Stabilisierung kann die Ummantelung 23 als Führung des Wellenleiters 12 beim Einstecken dienen, so dass die Fertigung des Hochfrequenzbausteins 1 hierdurch wiederum erleichtert wird.

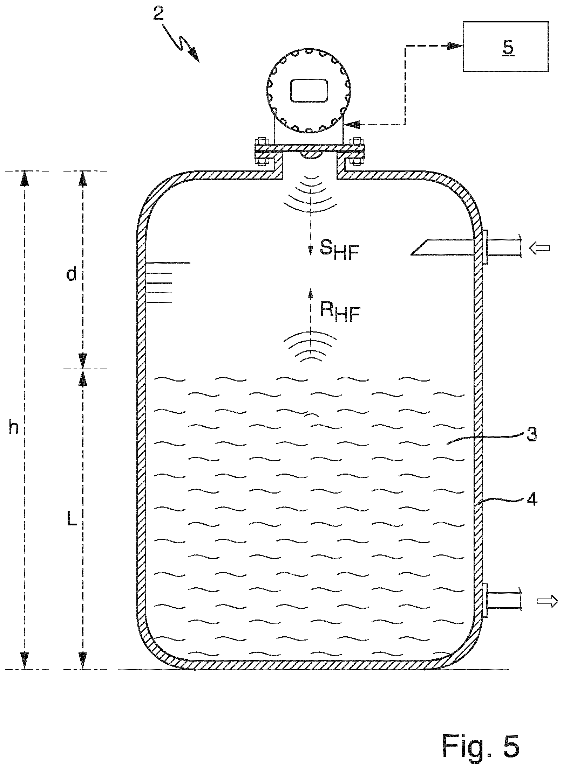

In Fig. 5 ist eine mögliche Verwendung des erfindungsgemäßen Hochfrequenzbausteins 1 in einem Füllstandsmessgerät 2 gezeigt. Hierbei dient das Füllstandsmessgerät 2 zur Messung des Füllstandes L eines in einem Behälter 4 befindlichen Füllgutes 3. Bei dem Füllgut 3 kann es sich einerseits um Flüssigkeiten wie beispielsweise Raffinerieprodukte, etwa Öle oder Flüssiggase, (Ab-)Wasser, Getränke oder pharmazeutische Komponenten handeln; Es kann sich aber auch um Feststoffe wie Kies, Saatgut oder Vergleichbarem handeln.

Zur Füllstands-Messung ist das Füllstandsmessgerät 2 in einer bekannten Einbauhöhe h oberhalb des Füllgutes 3 am Behälter 4 angebracht. Dabei ist das Füllstandsmessgerät 2 so am Behälter 4 ausgerichtet, dass mittels des Hochfrequenzbausteins 1 erzeugte Radar-Signale S_{HF} in Richtung der Oberfläche des Füllgutes 3 ausgesendet werden. Hierfür koppelt der Hochfrequenzbaustein 1 das als Radar-Signal S_{HF} auszusendende Hochfrequenz-Signal S_{HF} in eine entsprechende (Hohlleiter-) Antenne des Füllstandsmessgerätes 2 ein. Nach Reflektion an der Füllgut-Oberfläche wird das reflektierte Radar-Signal R_{HF} von der Antenne empfangen und entsprechend wieder als Hochfrequenz-Signal r_{HF} dem Hochfrequenzbaustein 1 zugeführt. Dabei empfängt das Füllstandsmessgerät 2 das reflektierte Radar-Signal R_{HF} in Abhängigkeit des Abstandes d = h - L zur Füllgut-Oberfläche. Da die Einbauhöhe h bekannt ist (je nach Prozess-Anlage kann die Einbauhöhe h bis zu mehr als 100 m betragen), lässt sich mittels obiger Formel anhand des gemessenen Abstandes d der Füllstand L bestimmen. Bei Implementierung des Puls-Laufzeit Verfahrens wird der Abstand d auf Basis der gemessenen Puls-Laufzeit t des ausgesendeten, pulsförmigen Radar-Signals S_{HF} berechnet. Im Falle des FMCW-Verfahrens wird der Abstand d über die momentane Differenz-Frequenz zwischen dem ausgesendeten, frequenzmodulierten Radar-Signal S_{HF} und dem empfangenen, reflektierten Radar-Signal R_{HF} ermittelt.

In der Regel ist das Füllstandsmessgerät 2 über ein Bussystem, etwa "PROFIBUS", "HART", "Wireless HART" oder "Ethernet" mit einer übergeordneten Einheit 5, beispielsweise einem Prozessleitsystem oder einer per Internet ansteuerbaren Datenbank, verbunden. Hierüber können zum einen Informationen über den Betriebszustand des Füllstandsmessgerätes 2 kommuniziert werden. Es können auch Informationen über den Füllstand L übermittelt werden, um gegebenenfalls die am Behälter 4 vorhandenen Zu- oder Abflüsse zu steuern.

Da das Füllstandsmessgerät 2 auf dem erfindungsgemäßen Hochfrequenzbaustein 1 basiert, profitiert es von dessen geringem Leistungsverbrauch sowie den Radarfrequenzen von potentiell über 100 GHz. Dabei äußert sich die hohe Radar-Frequenz vor allem in einer kompakt auslegbaren Antenne bzw. dem entsprechend engen Strahlkegel des Radar-Signals S_{HF} sowie einem hohen Auflösungsvermögen des Füllstandes L im sub-Millimeterbereich.

### Bezugszeichenliste

- 1: Hochfrequenzbaustein
- 2: Füllstandsmessgerät
- 3: Füllgut
- 4: Behälter
- 10: Halbleiterbauteil
- 11: Koppelelement
- 12: Wellenleiter
- 13: Steckkontakt
- 14: Kleber
- 15: Leiterplattensubstrat
- 16: Aufsatz
- 17: Einfassung
- 18: Vergusskapselung
- 19: Leadframe
- 20: Bonddraht
- 21: Metallstruktur
- 22: Haftschicht
- 23: Ummantelung
- d: Entfernung
- h: Einbauhöhe
- L: Füllstand
- R_{HF}: Empfangenes Radar-Signal
- r_{HF}: Empfangenes Hochfrequenz-Signal
- S_{HF}: Radar-Signal
- s_{HF}: Hochfrequenz-Signal

## Patentansprüche

1. Hochfrequenzbaustein, umfassend:
- Ein Halbleiterbauteil (10), das ausgelegt ist, elektrische Hochfrequenz-Signale (s_{HF}, r_{HF}) zu erzeugen und/oder zu verarbeiten, mit
o einer Kontaktfläche (21), mittels dem die elektrischen Hochfrequenz-Signale (s_{HF}, r_{HF}) ein- bzw. auskoppelbar sind,
- ein dielektrisches Koppelelement (11) um die Hochfrequenz-Signale (s_{HF}) als Radar-Signale (S_{HF}) in
- einen dielektrischen Wellenleiter (12) einzukoppeln, und/oder um Radar-Signale (R_{HF}) aus dem Wellenleiter (12) als elektrische Hochfrequenz-Signale (r_{HF}) in das Halbleiterbauteil (10) einzukoppeln, wobei das Koppelement (11) und der Wellenleiter (12)
- einen Steckkontakt (13) ausbilden;
**dadurch gekennzeichnet, dass**
das dielektrisches Koppelelement mittels der Kontaktfläche mit dem Halbleiterbauteil kontaktiert ist.

2. Hochfrequenzbaustein nach Anspruch 1, wobei der Steckkontakt (13) als
- Vertiefung im Wellenleiter (12) oder im Koppelelement (11), und als
- korrespondierende Struktur in der jeweils anderen Komponente (11, 12) ausgebildet ist.

3. Hochfrequenzbaustein nach Anspruch 2, wobei die Vertiefung konisch zulaufend ausgestaltet ist, und wobei die Struktur, die zur Vertiefung korrespondiert, entsprechend kegelförmig bzw. kegelstumpfförmig geformt ist.

4. Hochfrequenzbaustein nach einem der vorhergehenden Ansprüche, wobei der Steckkontakt (13) einrastbar ausgebildet ist.

5. Hochfrequenzbaustein nach einem der vorhergehenden Ansprüche, wobei das Koppelelement (11) und/oder der Wellenleiter (12) aus einem dielektrischen Material mit einem Dielektrizitätswert von mindestens zwei gefertigt sind/ist.

6. Hochfrequenzbaustein nach einem der vorhergehenden Ansprüche, wobei das Koppelement (11) mittels eines insbesondere nichtleitfähigen Klebers (14) auf dem Halbleiterbauteil (10) befestigt ist.

7. Hochfrequenzbaustein nach einem der vorhergehenden Ansprüche, wobei die Kontaktfläche (21) zur Einkopplung der Radar-Signale (S_{HF}, R_{HF}) zum Koppelelement (11) hin als eine planare Metallstruktur (21), insbesondere eine Patch-Struktur mit einer Mindestkantenlänge von einem Viertel der Wellenlänge der Radar-Signale (S_{HF}, R_{HF}), ausgeführt ist.

8. Hochfrequenzbaustein nach einem der vorhergehenden Ansprüche, wobei das Koppelelement (11) und der Wellenleiter (12) im Bereich des Steckkontaktes (13) eine Ummantelung (23), insbesondere aus einem Metall oder einem Schaumstoff, aufweist.

9. Hochfrequenzbaustein nach einem der vorhergehenden Ansprüche, wobei das Halbleiterbauteil (10) auf einem Leiterplattensubstrat (15) angeordnet ist, wobei der Wellenleiter (12) in einen Aufsatz (16), insbesondere einen Spritzguss-Aufsatz, eingefasst ist, und wobei der Aufsatz (16) auf dem Leiterplattensubstrat (15) befestigt ist.

10. Hochfrequenzbaustein nach einem der vorhergehenden Ansprüche, wobei das Halbleiterbauteil (10) mit einer Vergusskapselung (18) derart gekapselt ist, dass das Halbeiterbauteil (10) an einer Kontaktfläche zum Koppelelement (11) hin frei von Verguss ist.

11. Hochfrequenzbaustein nach einem der vorhergehenden Ansprüche, wobei das Halbleiterbauteil (10) ausgelegt ist,
- das Hochfrequenz-Signal (s_{HF}) mit einer Frequenz von zumindest 60 GHz erzeugen, und/oder
- das empfangene Hochfrequenz-Signal (r_{HF}) in ein Auswertungssignal mit einer niedrigeren Frequenz zu konvertieren.

12. Radar-basiertes Abstandsmessgerät (2) zur Bestimmung eines Abstandes (d) zu einem Messobjekt (3), umfassend:
- Einen Hochfrequenzbaustein (1) nach einem der vorhergehenden Ansprüche,
- eine an den Wellenleiter (12) anschließende Antenne, die ausgelegt ist, die Radar-Signale (S_{HF}, R_{HF}) in Richtung des Messobjektes (3) auszusenden und nach Reflektion am Messobjekt (3) zu empfangen,
wobei das Halbleiterbauteil (10) ausgelegt ist, anhand zumindest der reflektierten Radar-Signale (R_{HF}) den Abstand (d) zu bestimmen.

13. Verwendung des Abstandsmessgerätes (2) nach Anspruch 12 als Füllstandsmessgerät zur Messung eines Füllstandes (L) eines in einem Behälter (4) befindlichen Füllgutes (3).

14. Verfahren zur Fertigung des Hochfrequenzbausteins (1) nach einem der Ansprüche 1 bis 11, folgende Verfahrensschritte umfassend:
- Befestigen des Koppelelementes (11) auf dem Halbleiterbauteil (10), insbesondere mittels eines nichtleitfähigen Klebers,
- Einstecken des Wellenleiters (12) in das Koppelelement (11) am Steckkontakt (13).

## Claims

1. High-frequency module, comprising:
- a semi-conductor part (10) that is designed to generate and/or process electrical high-frequency signals (s_{HF}, rHF), with
∘ a contact surface (21) by means of which the electrical high-frequency signals (s_{HF}, r_{HF}) can be coupled or uncoupled,
- a dielectric coupling element (11) for coupling the high-frequency signals (s_{HF}) as radar signals (S_{HF}) into
- a dielectric waveguide (12) and/or for coupling radar signals (R_{HF}) from the waveguide (12) into the semi-conductor part (10) as electrical high-frequency signals (r_{HF}), wherein the coupling element (11) and the waveguide (12) form
- a plug-in contact (13);
**characterized in that**
the dielectric coupling element is in contact with the semi-conductor module by means of the contact surface.

2. High-frequency module as claimed in Claim 1, wherein the plug-in contact (13) is implemented in the form
- of an indentation in the waveguide (12) or in the coupling element (11), and in the form
- of a corresponding structure in the other respective component (11, 12).

3. High-frequency module as claimed in Claim 2, wherein the indentation is conical and
wherein the structure corresponding to the indentation is correspondingly cone-shaped or in the form of a frustum.

4. High-frequency module as claimed in one of the previous claims, wherein the plug-in contact (13) is designed in a way that it can be clicked into place.

5. High-frequency module as claimed in one of the previous claims, wherein the coupling element (11) and/or the waveguide (12) is/are made from a dielectric material with a dielectric value of at least two.

6. High-frequency module as claimed in one of the previous claims, wherein the coupling element (11) is secured to the semi-conductor part (10) using an adhesive (14), particularly a non-conductive adhesive.

7. High-frequency module as claimed in one of the previous claims, wherein the contact surface (21) for coupling in the radar signals (S_{HF}, R_{HF}) is designed as a planar metal structure (21) towards the coupling element (11), particularly a patch structure with a minimum edge length of a quarter of the wavelength of the radar signals (S_{HF}, R_{HF}).

8. High-frequency module as claimed in one of the previous claims, wherein, in the area of the plug-in contact (13), the coupling element (11) and the waveguide (12) have a jacketing (23), particularly made of a metal or a foam.

9. High-frequency module as claimed in one of the previous claims, wherein the semi-conductor part (10) is arranged on a printed circuit board substrate (15), wherein the waveguide (12) is incorporated in a support (16), particularly an injection molding support, and wherein the support (16) is fixed on the printed circuit board substrate (15).

10. High-frequency module as claimed in one of the previous claims, wherein the semi-conductor part (10) is encapsulated with a casting encapsulation (18) in such a way that the semi-conductor part (10) is free from casting at a contact surface towards the coupling element (11).

11. High-frequency module as claimed in one of the previous claims, wherein the semi-conductor part (10) is designed to
- generate the high-frequency signal (s_{HF}) with a frequency of at least 60 GHz and/or
- convert the high-frequency signal (r_{HF}) received to an evaluation signal with a lower frequency.

12. Radar-based distance measuring device (2) for determining a distance (d) to a measuring object (3), comprising:
- a high-frequency module (1) as claimed in one of the previous claims,
- an antenna following on from the waveguide (12) which is designed to emit radar signals (S_{HF}, R_{HF}) in the direction of the
measurement object (3)
and to receive signals after reflection at the measurement object (3),
wherein the semi-conductor part (10) is designed to determine the distance (d) using at least the reflected radar signals (R_{HF}).

13. Use of the distance measuring device (2) as claimed in Claim 12 as a level measuring device for measuring a level (L) of a product (3) located in a vessel (4).

14. Procedure for the fabrication of the high-frequency module (1) as claimed in one of the Claims 1 to 11, said procedure comprising the following steps:
- Fastening of the coupling element (11) to the semi-conductor part (10), particularly using a non-conductive adhesive,
- Insertion of the waveguide (12) into the coupling element (11) at the plug-in contact (13).

## Revendications

1. Composant haute fréquence, comprenant :
- un module semi-conducteur (10), lequel module est conçu pour générer et/ou traiter des signaux électriques haute fréquence (s_{HF}, rHF), comprenant
∘ une surface de contact (21), au moyen de laquelle les signaux électriques haute fréquence (s_{HF}, r_{HF}) peuvent être couplés ou découplés,
- un élément de couplage diélectrique (11) pour coupler les signaux haute fréquence (s_{HF}) en tant que signaux radar (S_{HF}) dans
- un guide d'ondes diélectrique (12) et/ou pour coupler les signaux radar (R_{HF}) du guide d'ondes (12) en tant que signaux électriques haute fréquence (r_{HF}) dans le module semi-conducteur (10), l'élément de couplage (11) et le guide d'ondes (12) formant
- un contact enfichable (13) ;
**caractérisé en ce que**
l'élément de couplage diélectrique est en contact avec le module semi-conducteur au moyen de la surface de contact.

2. Composant haute fréquence selon la revendication 1, pour lequel le contact enfichable (13) est réalisé sous la forme
- d'un renfoncement dans le guide d'ondes (12) ou dans l'élément de couplage (11), et sous la forme
- d'une structure correspondante dans l'autre composant respectif (11, 12).

3. Composant haute fréquence selon la revendication 2, pour lequel le renfoncement est de forme conique et
pour lequel la structure correspondant au renfoncement présente une forme conique ou tronconique correspondante.

4. Composant haute fréquence selon l'une des revendications précédentes, pour lequel le contact enfichable (13) est conçu de manière à pouvoir être encliqueté.

5. Composant haute fréquence selon l'une des revendications précédentes, pour lequel l'élément de couplage (11) et/ou le guide d'ondes (12) est/sont fabriqué(s) à partir d'un matériau diélectrique présentant une valeur diélectrique d'au moins deux.

6. Composant haute fréquence selon l'une des revendications précédentes, pour lequel l'élément de couplage (11) est fixé sur le module semi-conducteur (10) au moyen d'une colle (14), notamment non conductrice.

7. Composant haute fréquence selon l'une des revendications précédentes, pour lequel la surface de contact (21) pour le couplage des signaux radar (S_{HF}, R_{HF}) vers l'élément de couplage (11) est réalisée sous la forme d'une structure métallique plane (21), notamment d'une structure de patch avec une longueur d'arête minimale d'un quart de la longueur d'onde des signaux radar (S_{HF}, R_{HF}).

8. Composant haute fréquence selon l'une des revendications précédentes, pour lequel l'élément de couplage (11) et le guide d'ondes (12) présentent, dans la zone du contact enfichable (13), une gaine (23), notamment constituée d'un métal ou d'une mousse.

9. Composant haute fréquence selon l'une des revendications précédentes, pour lequel le module semi-conducteur (10) est disposé sur un substrat de circuit imprimé (15), le guide d'ondes (12) étant incorporé dans un support (16), notamment un support moulé par injection, et le support (16) étant fixé sur le substrat de circuit imprimé (15).

10. Composant haute fréquence selon l'une des revendications précédentes, pour lequel le module semi-conducteur (10) est enrobé avec un enrobage (18) de telle sorte que le module semi-conducteur (10) est exempt d'enrobage au niveau d'une surface de contact vers l'élément de couplage (11).

11. Composant haute fréquence selon l'une des revendications précédentes, pour lequel le module semi-conducteur (10) est conçu pour
- générer le signal haute fréquence (s_{HF}) à une fréquence d'au moins 60 GHz et/ou
- convertir le signal haute fréquence (r_{HF}) reçu en un signal d'évaluation à une fréquence inférieure.

12. Appareil de mesure de distance (2) basé sur un radar, lequel appareil est destiné à la détermination d'une distance (d) par rapport à un objet de mesure (3), lequel appareil comprend :
- un composant haute fréquence (1) selon l'une des revendications précédentes,
- une antenne raccordée au guide d'ondes (12), laquelle antenne est conçue pour émettre les signaux radar (S_{HF}, R_{HF}) en direction de l'objet à mesurer (3) et pour les recevoir après réflexion sur l'objet à mesurer (3),
le module semi-conducteur (10) étant conçu pour déterminer la distance (d) à l'aide d'au moins les signaux radar (R_{HF}) réfléchis.

13. Utilisation de l'appareil de mesure de distance (2) selon la revendication 12 en tant que transmetteur de niveau destiné à la mesure d'un niveau (L) d'un produit (3) se trouvant dans un réservoir (4).

14. Procédé destiné à la fabrication du composant haute fréquence (1) selon l'une des revendications 1 à 11, lequel procédé comprend les étapes suivantes :
- Fixation de l'élément de couplage (11) sur le module semi-conducteur (10), notamment au moyen d'une colle non conductrice,
- Insertion du guide d'ondes (12) dans l'élément de couplage (11) au niveau du contact enfichable (13).
